# EUROPEAN PATENT APPLICATION

(11) **EP 3 479 913 A1**
(43) Date of publication of application: **08.05.2019**
(21) Application number: 18204517.9
(22) Date of filing: 06.11.2018
(51) Int. Cl.: B08B 15/02, B65G 69/18, B25J 21/02

(54) **APPARATUS FOR THE EMPTYING OF DRUMS IN STRICT CONTAINMENT CONDITIONS AND CORRESPONDING PROCESS**

(30) Priority: 07.11.2017 IT 201700126636
(71) Applicant: BIDACHEM S.p.A., I-24040 Fornovo San Giovanni (Bergamo) (IT)
(72) Inventor: DICORATO, Antonio, 24040 FORNOVO SAN GIOVANNI (BG) (IT); GUARDAMAGNA, Paolo, 24040 FORNOVO SAN GIOVANNI (BG) (IT); AMBROSINI, Leonardo, 24040 FORNOVO SAN GIOVANNI (BG) (IT)
(74) Representative: Bianchetti Bracco Minoja S.r.l.

(57) **Abstract**

Apparatus apt to carry out unloading operations in strict containment conditions of substances contained in drums (F) or containers in a sealing bag (S), comprising:
- an isolator (11) with a box-like body (11a) capable of receiving in succession, in its interior, the drums (F) to be emptied and to isolate them from an operator who operates manually, from outside the isolator (11), on the drums (F), once received and placed inside the isolator (11), in order to empty them;
- an entry port (12), associated with the isolator (11) and having a body (12a) protruding from the respective box-like body (11a), apt to allow the entry and introduction into the isolator (11) of the drums (F) to be emptied; and
- a sealing ring (13), selectively inflatable and deflatable, associated with the protruding body (12a) of the entry port (12) of the isolator (11) and movable along it.

## Description

### Field of the invention

The present invention relates in general to the field of systems and equipment for emptying drums and similar containers containing a material, typically but not exclusively powdered, in a larger treatment system or similar plant in which the material, once emptied from the respective drums and containers, is properly treated.

More specifically, the invention relates to equipment for emptying drums or similar containers under strict containment conditions, as defined in Regulation (EC) No. 1907/2006, corresponding to the preamble to the first independent claim, i.e. the type specifically including an isolator that is configured to receive, one after another, the drums to be emptied and to isolate them, when they are received and placed inside the isolator, compared to an operator who operates manually, from outside the same isolator, on these drums, in order to empty them.

The present invention also concerns a corresponding process for emptying drums or similar containers under strict containment conditions, in which the drums to be emptied are received by an appropriate isolator whose function is to isolate them from the outside environment in which there is an operator working manually on these drums, placed inside the isolator, in order to empty them.

### Background of the invention and prior art

Installation is known in plants for the treatment of materials, in particular powdered materials, which are contained and supplied to the treatment plant in drums or similar containers, equipment and apparatuses having the specific function of minimizing exposure to powdered material by the operator in charge of the operations of emptying drums to feed the plant where the material will be treated.

The operations of discharging containers or drums containing certain chemicals must comply with certain rules and regulations, and in particular with Regulation (EC) no 1907/2006 of the European Parliament and of the Council on the registration, evaluation, authorisation and restriction of chemicals (REACH), which regulation gives a definition of containment, called "strict containment", prescribing the application thereof, by means of technical devices, also to the loading and unloading of substances.

The powdered material contained in the drum that is received by these technical devices or known equipment to be emptied under strict containment conditions, can be:
- in direct contact with the material constituting the drum, as in the case of aluminium chloride powder contained in metal drums;
- contained, for reasons of preservation of the quality of the same powdered material, in one or more commonly in two bags of inert material, such as polyethylene, contained in the same drum to be emptied, of which the innermost one directly contains the powdered substance, while the outermost one performs the same function of containing the powdered material in the event of damage to the innermost bag.

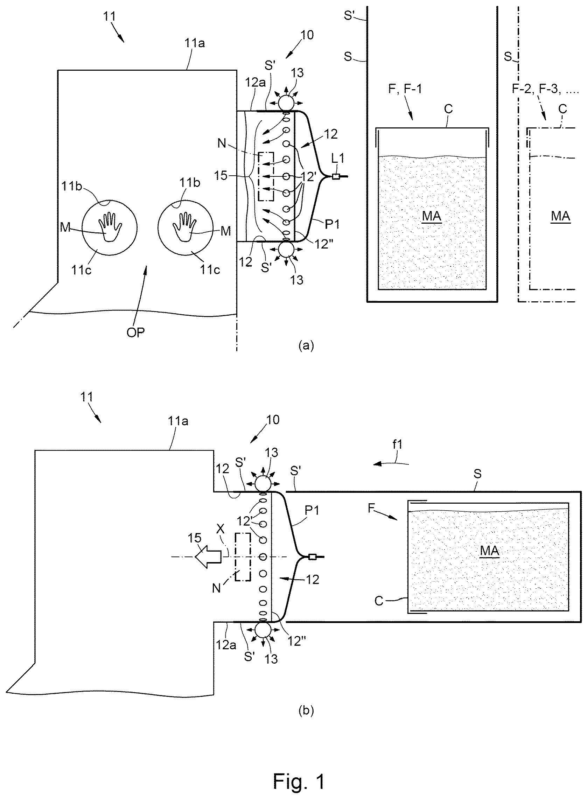

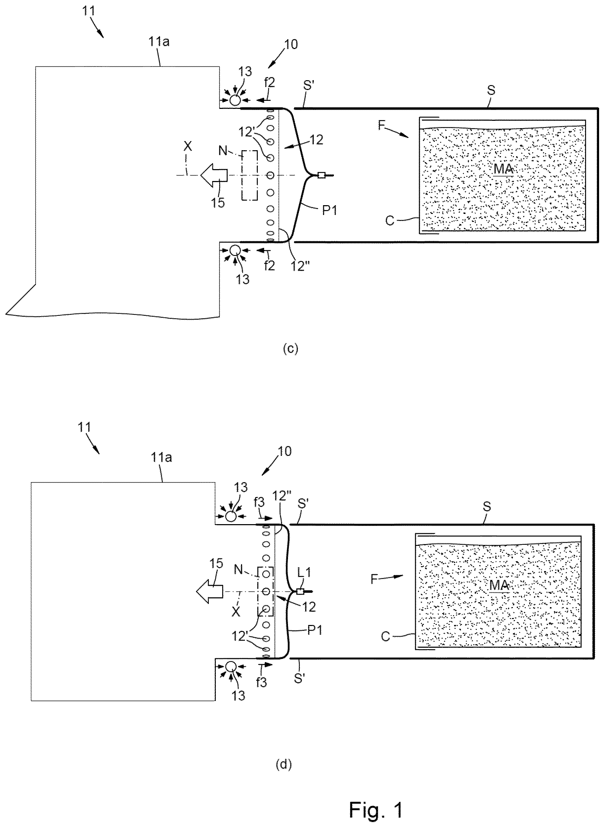

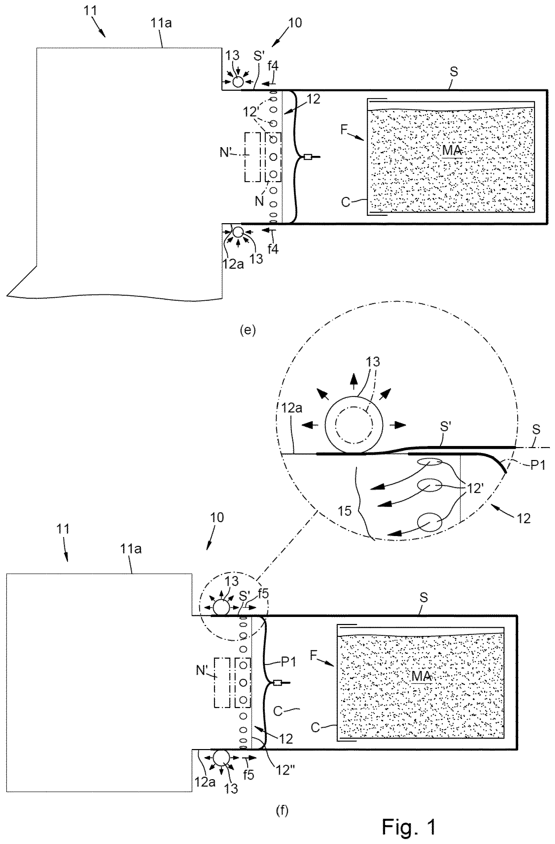

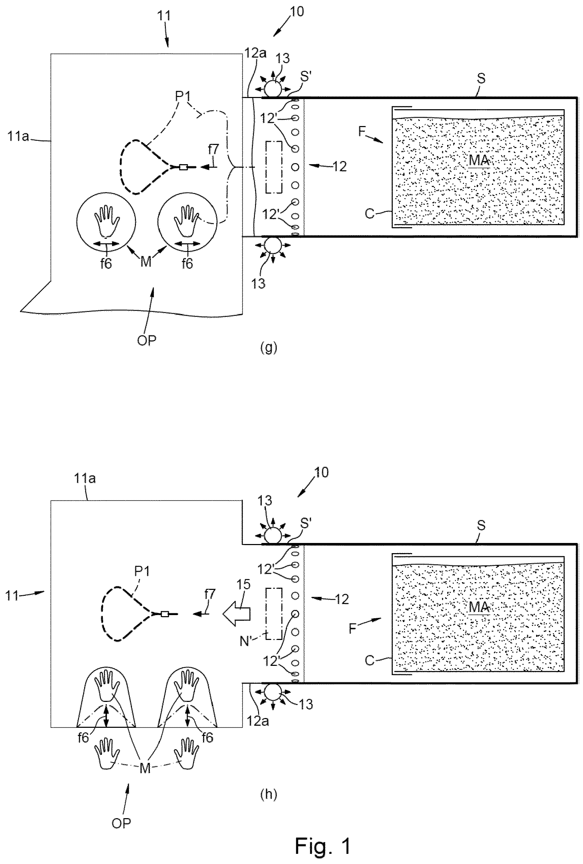

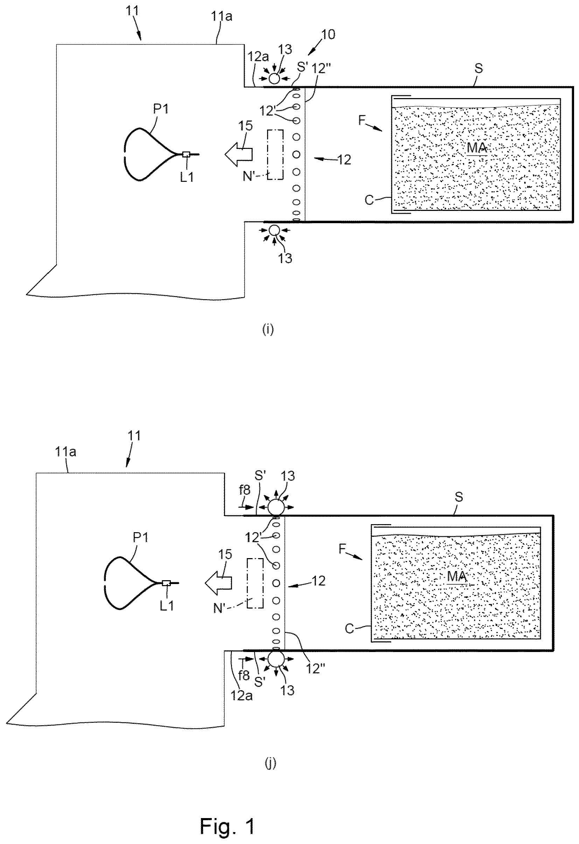

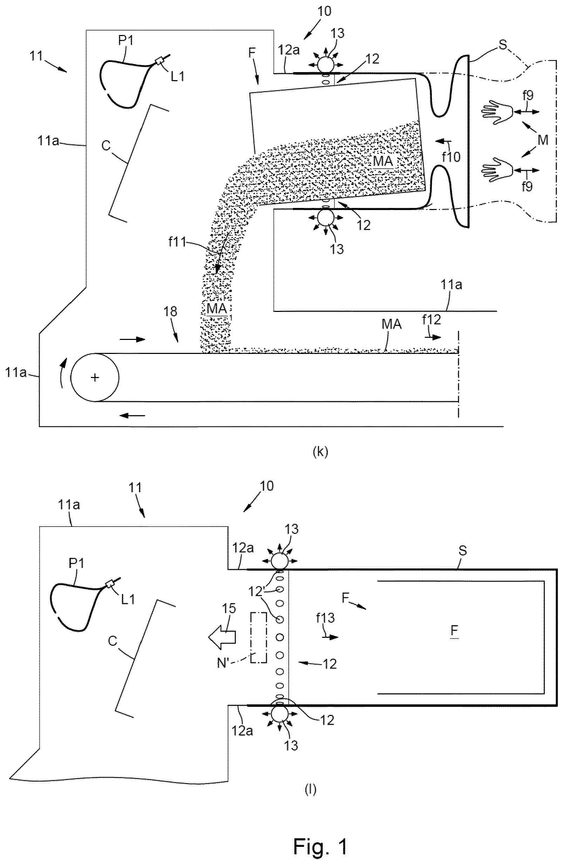

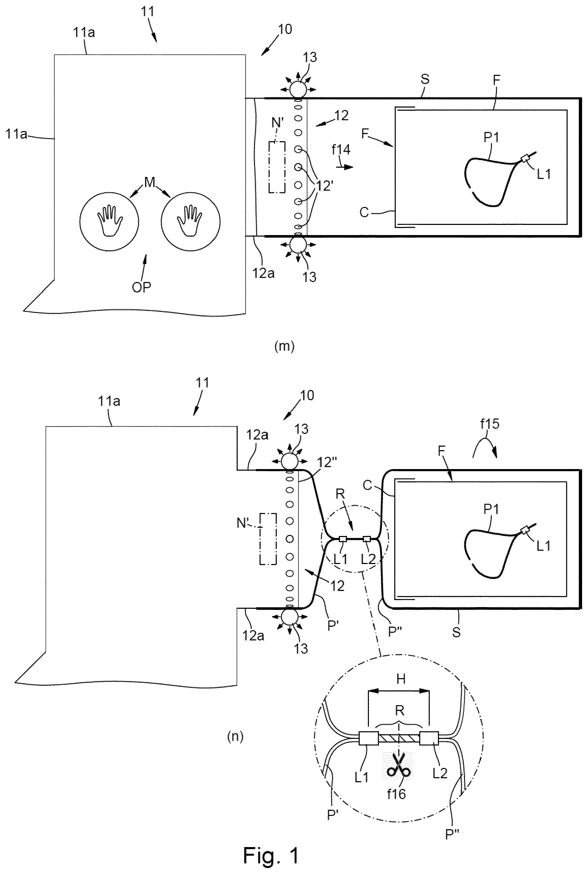

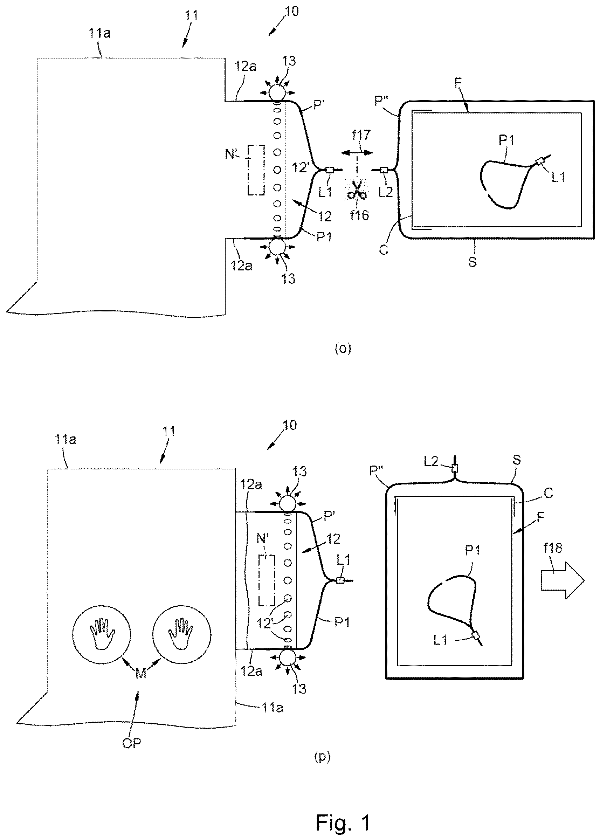

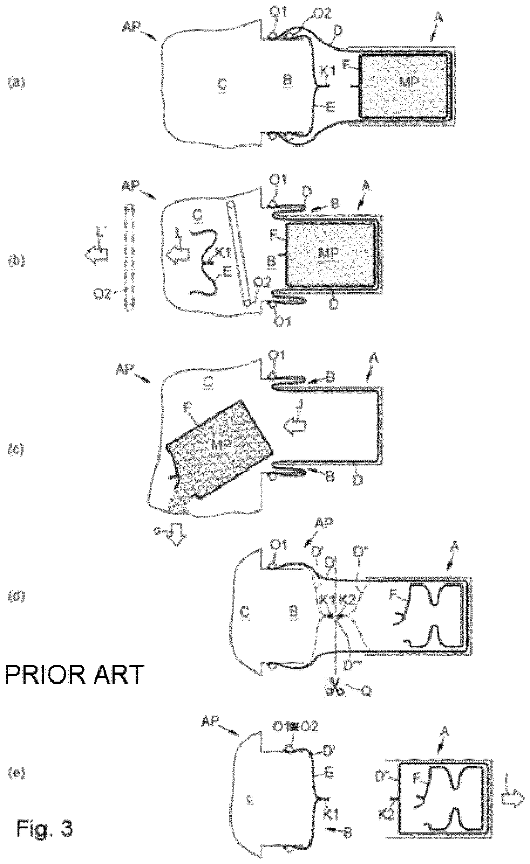

In general, in the prior art it is possible to empty the drums under strict containment conditions using as sealing bag:
- the outermost inert material bag, that is the one not in direct contact with the substance, as in the prior art represented in Fig. 3 (indicated in this Fig. 3 as external bag D);
- a bag of inert material specially added externally to the drums that directly contain the powdered substance, as in the case of the present invention as illustrated below and shown in Fig. 1.

Moreover, usually, these known emptying apparatuses comprise means and devices having the function of sealing and isolating, with respect to the outside environment, the drum to be emptied, which is received by the same apparatus and into which it will be emptied, in order to avoid any pollution and dispersion in the outside environment of the powdered material contained in the drum.

For example, to this end, known apparatuses and equipment typically comprise an isolator, exhibiting a main box-like body, capable of being fed and receiving through a respective entry port the drums intended to be emptied of the material contained in them, in which this isolator has the function of isolating the drums to be emptied, when they are received and arranged inside the isolator, from the outside environment.

This isolator in turn is often configured to allow an operator, present in the outside environment, to operate manually on the drums arranged inside the same isolator, but isolated from the outside, in order to perform those manual operations that are useful and necessary for emptying them.

For example, for this purpose, this known equipment for emptying drums under strict containment conditions may comprise, for example, one or more openings set on the external surface of the isolator, each sealed by a flexible bag or similar element, so as to allow the operator to operate manually, from the outside of the isolator itself, through these flexible bags that act as gloves and sleeves for the operator's hands and arms, on the drums to be emptied, received and introduced into the isolator, without coming into direct contact and therefore remaining isolated from them.

In this way, the operator, working from outside the equipment and without coming into physical contact with the drum and the material contained in it, works on the drum and in particular cuts the sealing bag in which the powdered material is contained so as to cause the material contained in the drum to fall by gravity into the isolator and its consequent emptying.

This equipment, known and currently available commercially, although a valid support in emptying drums under conditions of strict containment, is not free of disadvantages, however, so as to require further improvement.

For example, one of these known emptying apparatuses, which in some way represents the current standard, offered on the market by the company Hecht and briefly illustrated for completeness of information in Fig. 3, divided into sections (a)-(e), provides for the emptying, under conditions of strict containment, of drums with double inner bag fed in succession to the equipment, using the outermost bag, denoted in Fig. 3 by D, not directly containing the powdered material, as sealing bag, during the emptying operations of the inner bag, denoted by F in Fig. 3, directly containing the powdered material.

In this way, the second outer bag, open at one edge, forms an envelope of the first inner bag, closed and sealed, which contains the material to be emptied from the drum.

In the operation of this known equipment, denoted overall by AP in Fig. 3, a respective operator, after having moved a new drum A to be emptied towards an entry port B of an isolator C included in the same equipment AP, wraps and seals the open edge of the outer bag D contained in the new drum A to be emptied, at the entry port B, by means of an O-ring type ring, denoted by O1, as schematised in Fig. 3 - section (a).

Then, as schematised and indicated by an arrow L in Fig. 3 - section (b), the operator, operating manually from the outside of the isolator C, removes from the respective entry port B both a remaining or residual portion E of the external bag contained in the previous drum, i.e. in the drum emptied immediately before the new one A to be emptied, and an O-ring, denoted by O2, used to attach and seal with respect to the entry port B this external bag D contained in the previous drum.

Therefore, in this way, the O-ring O2 is lost, as shown with a dashed and dotted line and schematised with an arrow L', again in Fig. 3 - section (b).

Furthermore, again as schematised in Fig. 3 - section (b), the operator enters the new drum A to be emptied in the entry port B of the equipment AP.

Then, as schematised and indicated by an arrow J in Fig. 3 - section (c), the operator, always operating manually from the outside of isolator C, extracts from the new drum A and drags towards the inside of the same isolator C the inner bag F contained in the new drum A and containing the powdered material MP to be discharged, while the outer bag D remains in the new drum A, empty.

Then the operator cuts the inner bag F with a knife so as to cause the powdered material MP contained in the inner bag F to fall by gravity into the isolator, as indicated by an arrow G.

The inner bag F, once emptied of the powdered material it contained, is then again placed by the operator in the drum A, as schematised in Fig. 3 - section (d).

Subsequently, that is after emptying the drum A and reintroducing the outer bag D into the latter, emptied, the operator, as schematised with a dashed and dotted line again in Fig. 3 - section (d), tightens in a central area the outer bag D so as to divide it into a first portion D' and into a second portion D", separated by an intermediate central portion D'", arranged respectively on the side of the isolator C and on the side of the new drum A.

The operator then tightens two straps, respectively K1 and K2, around this intermediate portion D"', of the outer bag D, placed between the two portions D' and D", and then, as schematised with scissors again in Fig. 3 - section (d), makes a cut of this intermediate portion D'" between the two straps K1 and K2, so as to physically separate the two portions D' and D" from each other.

In this way, the first portion D' of the outer bag D, remains attached to the entry port B of the isolator C through the O-ring O1 to be then removed, together with the same O-ring O1, during the cycle of emptying of the next drum, while the second portion D", of the outer bag D, remains in the empty drum A.

In addition, the strap K1 closes and seals the first portion D', i.e. the outer residual bag that remains attached to isolator C, so as to ensure separation between the inside of the equipment AP and the isolator C and the outside environment.

The strap K2 in turn, as schematised in Fig. 3 - section (e), closes and seals the second portion D", of the outer bag D, which has remained and is contained in the empty drum A, so that the inner bag F, emptied of the powdered material MP, is captured in this same second portion D", of the outer bag D, which, after cutting, remains in the empty drum A.

Finally, the empty drum A, containing this second portion D" of the outer bag D, in turn containing the inner bag F emptied of the powdered material MP, is evacuated, as schematised with an arrow I in Fig. 3 - section (e), to allow the equipment AP to be fed with a subsequent new drum to be emptied.

Therefore, this equipment, known, for emptying drums, developed by the company Hecht and offered on the market as an innovative technology with double O-ring so as to highlight the salient features, in addition to the disadvantage of requiring a series of manual operations, rather inconvenient, by the respective operator, to seal, with respect to the entry port of the isolator, the outer bag contained in the drum to be emptied, also has the significant drawback of requiring a continuous consumption of materials during the emptying of the drums.

In fact, as illustrated above, the equipment requires, after the emptying of each single drum of the material contained in it, in order to fix and seal on the entry port of the isolator the outer bag of the new drum to be emptied, a new O-ring that is then removed and therefore lost during the cycle of emptying of a subsequent drum with the same equipment.

Naturally the need to use a new O-ring for each cycle of emptying of a drum, which is then lost in the cycle of emptying of the next drum, involves corresponding and not negligible additional costs in the management of this known equipment, as well as a problem, not to be underestimated, of disposal of the O-rings that are lost.

### Summary of the invention

Therefore, a first object of the present invention is to create a new and innovative apparatus, for the emptying of drums under conditions of strict containment, i.e. subject to compliance with EC Regulation no. 1907/2006 (REACH) already mentioned above, which offers better performances compared to the equipment currently known and in use, and in particular, in addition to ensuring the necessary conditions of isolation and tightness, with respect to the outside environment, of the drums to be emptied, fed and received in succession within the same equipment, is designed to further facilitate and make more convenient the manual operations that are performed by the operator, operating from outside the equipment, to empty the drums received and arranged inside the equipment.

A further second object of the present invention is also that of creating an apparatus, for the emptying of drums in conditions of strict containment, that in its use and operation does not require the cyclical and systematic use of new pieces or parts, after the emptying of each single drum, and more generally does not involve consumption of materials such as to adversely affect the cost of running the equipment and also involve disposal problems.

The above objects can be considered to have been fully achieved by the equipment for emptying drums under strict containment conditions having the features defined by independent claim 1 and by the corresponding process for emptying drums under strict containment conditions having the steps defined by independent claim 7.

Particular embodiments of the present invention are also defined by the dependent claims.

There are numerous advantages, partly already implicitly stated beforehand, which are associated with the new apparatus and the corresponding process for emptying drums under conditions of strict containment, proposed by the present invention, such as those listed below, purely by way of an example:
- effective and rapid emptying of the drums fed in succession to the equipment, without the risk of pollution and environmental dispersions of the powdered material contained in the drums to be emptied;
- reduction to a minimum of the manual operations that the external operator, operating outside the equipment, still has to carry out on the drums, isolated from the outside environment and arranged inside the isolator, in order to empty them;
- absolute guarantee of isolation, with respect to the outside environment, of the drums received inside the equipment and therefore of the material contained therein, during the operations of emptying the drums;
- emptying of the drums without having to use, during the cycle to empty each drum, parts and in general material intended to be lost, so as to limit the operating costs for emptying the drums and also avoid problems of disposal of the material that is lost.

### Brief description of the drawings

These and other objects, features and advantages of the present invention will be made clear and evident by the following description of one of its preferred embodiments, given by way of a non-limiting example with reference to the accompanying drawings, in which:
Fig. 1 is a diagram, divided into sections (a)-(p), showing schematically an apparatus for emptying drums under strict containment conditions, in accordance with the present invention, in the various and successive operating phases in which such apparatus is used to empty a generic drum; and
Fig. 2 is a schematic view, on an increased scale, of some parts and details, and in particular of a selectively inflatable and deflatable sealing ring, of the apparatus of the invention of Fig. 1 for emptying drums under conditions of strict containment; and
Fig. 3 is a diagram that synthetically illustrates an apparatus, conforming to the prior art and currently in use, for emptying drums under conditions of strict containment, and the operation of this known apparatus.

### Description of a preferred embodiment of the apparatus of the invention for emptying drums in strict containment conditions

With reference to the drawings, a station or apparatus, in accordance with the present invention, for emptying drums in conditions of strict containment, or, as already mentioned, subject to compliance with EC Regulation no 1907/2006 (REACH), is denoted overall by 10.

In particular, Fig. 1, divided into sections (a)-(p), shows schematically the apparatus 10 of the invention in its use, that is the way in which the apparatus 10 works and is used to empty a generic drum, denoted by F, included in a sequence of drums F-1, F-2, F-3, etc., which are provided to feed and be received, in succession one after the other, from the same apparatus 10, to be emptied.

The apparatus 10 is, for example, used in a larger plant, such as a treatment equipment including, for example, a reactor, in order to empty a powdered material, denoted by MA, which is contained in the drum Fs fed to the apparatus 10 and intended to be treated in the reactor, and is configured to receive in succession one after the other the drums F to be emptied, in which each of these drums F, fed in succession to the apparatus 10 and containing the material MA to be emptied and intended to be treated in the reactor, is in turn contained in a respective sealing bag, denoted by S, also referred to here below simply as bag S.

In detail, the apparatus 10 includes:
- an isolator, denoted by 11, having a respective box-like body 11a suitable to receive, in its interior, in succession one after the other, the drums to be emptied, denoted as mentioned generically by F and more specifically by F-1, F-2, F-3, etc., with reference to the order in which they are received by the box-like body 11, and to isolate them from an operator of the apparatus 10, denoted by OP and schematised in the drawings with the respective hands M, who operates manually, from the outside of the isolator 11, on these drums F, received and placed inside the box-like body 11a of the isolator 11, in order to empty them; and
- an entry mouth or port, denoted by 12, associated with the isolator 11 and having a protruding body 12a that protrudes and extends along a respective axis X from the box-like body 11a of the same isolator 11,
in which this entry port 12 is suitable to allow the entry and introduction into the inside of the isolator 11 of the drums F, to be emptied, fed to the apparatus 10.

Advantageously, the protruding body 12a of the entry port 12 of the isolator 11 of the apparatus 10 of the invention has a plurality of holes, denoted by 12', which are formed along and adjacent to an edge 12", of the same protruding body 12a, distanced from the box-like body 11a of the isolator 11.

In particular, these holes 12' are associated with means of ventilation, of known features and therefore not shown in the drawings, in which these means of ventilation are apt to generate through the holes 12' a wind or flow of air, schematised with a plurality of arrows and denoted overall by 15, so as to create a vacuum, in the area of these holes 12', intended to facilitate the adhesion to the protruding body 12a of the sealing bags S containing the drums F to be emptied which are fed to the apparatus 10, and therefore the sealing, by means of these sealing bags S, of the area of the entry port 12, in the use of the apparatus 10 to empty the drums F, as described in greater detail here below.

Furthermore, the isolator 11 of the apparatus 10 of the invention, for emptying drums in strict containment conditions, comprises one or more openings schematised in the drawings and denoted by 11b, defined on the outer surface of the box-like body 11a of the isolator 11, in which each of these openings 11b is covered by a flexible bag 11c or similar element acting as a glove and sleeve respectively for the hands and arms of the operator OP, so as to allow him to operate manually, from the outside of the isolator 11, on the drums F, to be emptied, received and introduced into the isolator 11, without coming into direct contact and therefore remaining isolated from them.

According to a feature of the invention, the apparatus 10 comprises further:
- a sealing ring, denoted by 13, selectively inflatable and deflatable, arranged around the protruding body 12a of the entry port 12 of the isolator 11 and movable along the axis X of the protruding body 12a;
in which this sealing ring 13 has the function of sealing the area of the entry port 12, in the use of the apparatus 10 to empty the drums F, as illustrated more clearly below, describing the operation of the emptying apparatus 10.

The sealing ring 13 is associated with substantially known guide and movement means, which have the function of guiding and moving, under the control of the operator OP, the axial movement in the two directions, as denoted by an arrow FR, of the sealing ring 13 along the protruding body 12a of the entry port 12 of the isolator 11.

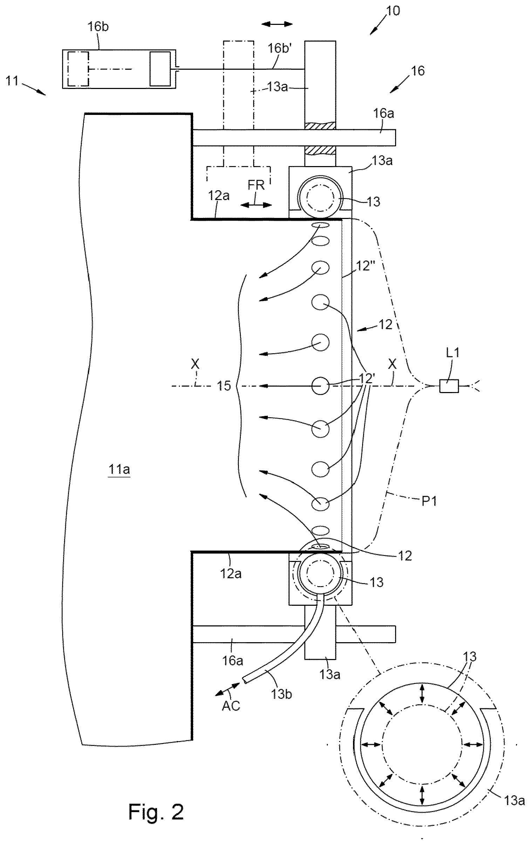

For example, with reference to Fig. 2, these guide and movement means, exhibiting known features, denoted overall by 16, may comprise a plurality of guides, each consisting of a bar 16a, which support and guide a support element 13a bearing the sealing ring 13, in the axial motion of the latter parallel to the axis X of the protruding body 12a of the entry port 12, and a pneumatic piston 16b, double-acting, having a rod 16b' which is connected to the support element 13a, in which this piston 16b is apt to be controlled by the operator OP to move and move forwards and backwards the sealing ring 13 along the protruding body 12a of the entry port 12, as indicated by a double arrow in Fig. 2.

Fig. 2 also shows how the sealing ring 13, supported by the support element 13a, is also associated with a pneumatic line 13b apt to supply and extract compressed air AC, as indicated by a double arrow, respectively to and from the same sealing ring 13, so as to selectively inflate and deflate it, following a corresponding command given by the operator OP of the apparatus 10, as shown with a dotted and dashed line schematised with a plurality of double radial arrows arranged around the axis of the sealing ring 13.

With reference to Fig. 1, the operation of the apparatus 10 of the invention will now be described, i.e. the way in which this apparatus 10 operates and is used to empty a plurality of drums F-1, F-2, F-3, etc., fed in succession one after the other, by the operator OP, to the same apparatus 10.

As shown in Fig. 1 - section (a), at the beginning of a generic emptying cycle of a generic new drum to be emptied, conventionally denoted by F, the apparatus 10 is in an initial configuration, in which it is prepared to receive this new drum F.

In particular, in this initial configuration, the apparatus 10 has a first remaining or residual portion, denoted by P1, of the sealing bag S containing the previous drum, i.e. the drum which was immediately emptied of the new drum F to be emptied, in which this remaining portion P1 has remained attached, in the area of an edge S' of the same bag S, at the end of the emptying cycle of this previous drum and after having been wrapped and fixed with adhesive tape N, to the protruding portion 12a of entry port 12 of the isolator 11.

Furthermore, in this initial configuration of the apparatus 10, the sealing ring 13 is in an advanced and inflated configuration, in which the sealing ring 13 is placed in an advanced position, along the protruding body 12a of the entry port 12, in alignment with the holes 12' formed along the edge of this protruding body 12a, and is also suitably inflated so as to press against these holes 12' the edge S' of the residual portion P1 of bag S containing the previously emptied drum.

Again, in this initial configuration, the ventilation means associated with the emptying apparatus 10 are active so as to generate a flow of air 15 that traverses the holes 12' of the protruding body 12a of the entry port 12, so as to create a vacuum, in the area of these holes 12', that favours the adherence of the edge S' of the portion P1 to the protruding body 12a of the entry port 12.

In this way, the combined effect of the pressure applied, in the area of the holes 12' formed along the edge of the protruding body 12a of the entry port 12, by the sealing ring 13, inflated, on the edge S' of the portion P1 attached to the protruding body 12a, and the vacuum generated by the flow of air 15, in the area of the same holes 12', ensures perfect sealing and adherence of the portion P1 of the bag S to the protruding body 12a, so as to completely isolate, in the area of the opening 12, the inside of the isolator 11 from the outside environment in which the operator OP of the apparatus 10 operates.

Again in this initial configuration, as shown in Fig. 1 - section (a) of the emptying apparatus 10, the generic new drum F to be emptied, containing a material MA, is placed in the area of the entry port 12, so as to be ready to be introduced into the same emptying apparatus 10 and consequently be emptied.

Then the drum F is moved and properly positioned near the entry port 12 of the isolator 11, to allow its convenient introduction into the same entry port 12.

For example, as schematised and indicated by an arrow f1 in Fig. 1 - section (b), the drum F can be moved and placed in a certain position, in which it is aligned with the entry port 12, by means of appropriate means of movement and positioning, so as to avoid that the operator OP of the apparatus 10 has to manually move and position the drum F near the entry port 12, or at least support and assist the operator in such operations.

These movement and positioning means apt to move and position appropriately the drum F in the area of the entry port 12, in order to introduce it later into the isolator 11, have substantially known features and can be made in multiple functionally equivalent forms in the sphere of the apparatus 10 of the invention, as well known to persons skilled in the art, so for reasons of brevity these means of movement and positioning will not be described in detail.

It should be noted only that these means of movement and positioning can generally comprise a motorized trolley, or in any case associated with motorized means capable of moving it, apt to receive the drum and raise it and orientate it so as to place it appropriately in the area of the entry port 12.

Therefore, as schematised in Fig. 1 - section (c) and indicated by a number of arrows pointing inwards, the sealing ring 13, following a command given by the operator OP, is deflated, so that it is reduced in size in section and consequently no longer applies any pressure on the portion P1 of the bag S, which in any case remains attached and adherent to the protruding body 12a of the entry port 12 as a result of the action of the flow of air 15 in the area of the holes 12' and the consequent vacuum generated inside the isolator 11.

Then the operator OP, after having given the command for the deflation of the sealing ring 13, slides it along the respective guides 16a so as to move it backwards along the protruding body 12a of the entry port 12, or towards the base, of this protruding body 12a, adjacent to the box-like body 11a of the isolator 11, as indicated by arrows f2.

For example, the operator OP can control this movement of the sealing ring 13 by means of the double-acting pneumatic piston 16b schematised in Fig. 2.

Subsequently, as schematised in Fig. 1 section (d) and indicated by arrows f3, the residual portion P1 of the bag S, no longer pressed by the sealing ring 13 against the protruding body 12a, but in any case attached and adhering to it, is moved manually by the operator OP forwards along the same protruding body 12a, i.e. towards the respective edge 12".

In this way, the operator OP uncovers a portion, of the external surface of the protruding body 12a, adjacent to the holes 12' formed along the edge of the protruding body 12a.

Then, as schematised in Fig. 1 section (e) and indicated by arrows f4, the edge S' of the bag S containing the new drum F to be emptied is manually fitted and wrapped by the operator OP around the protruding body 12a and suitably fixed to the latter by means of an adhesive tape N'.

In this way, the edge S' of the bag S, containing the new drum to be emptied, is placed over and covers the portion P1 of the bag S, attached to the protruding body 12a, which contained the previously emptied drum.

At this point, as schematised in Fig. 1 section (f) and indicated by arrows f5, the operator OP moves the sealing ring 13 forwards again, i.e. towards the edge 12" of the protruding body 12a, sliding it along the guides 16a, so as to place it, at the holes 12', above the edge S', of the bag S, fitted on the same protruding body 12a.

Also in this case the operator can control this displacement of the sealing ring 13 by means of the pneumatic piston 16b schematised in Fig. 2.

Then the operator commands again the inflation of the sealing ring 13, once positioned above the edge S', so that the sealing ring 13 expands in section, as denoted by a plurality of radial arrows directed outwards, so as to press the edge S' against the surface of the protruding body 12a, in the area of the holes 12'.

In this way, the edge S' of the bag S containing the new drum F to be emptied is firmly restrained on the protruding body 12a.

At the same time, this edge S' seals the area of the edge of the entry port 12 so as to prevent impurities from entering the isolator 11 from the outside environment.

For the sake of clarity, Fig. 1 - section (f) shows on an increased scale the area of the entry port 12 with the edge S' of the bag S pressed against the surface of the body protruding 12 by the sealing ring 13, inflated.

Subsequently, as shown in Fig. 1 section (g), the operator OP, working from the outside of the isolator with his hands M as indicated by double arrows f6, removes the residual portion P1 from the protruding body 12a and drags it inside the box-like body 11a of the isolator 11, as indicated by a dotted and dashed line and by an arrow f7.

For greater clarity, Fig. 1 section (h) schematically shows this phase of operation of the apparatus 10 from a different observation point, particularly from the top of the isolator 11, with respect to Fig. 1 section (g), which instead shows the apparatus 10 laterally.

Subsequently, as schematised in Fig. 1 section (i), the sealing ring 13 is deflated by the operator OP and therefore detaches from the edge S', of the bag S, releasing it.

However, in this phase, the edge S' of the bag S containing the new bag S, although no longer subject to pressure from the sealing ring 13, continues to isolate, with respect to the outside environment, the area of the entry port 12, that is to say to remain attached and adherent to the protruding body 12a, since the edge S' is fixed to the latter by means of the fixing tape N' and is also subject to the action of the vacuum, created in the area of the holes 12', which precisely favours the adherence of the edge S' to the protruding body 12a.

Then, as schematised in Fig. 1 - section (j), the sealing ring 13, once deflated, is moved by the operator OP forwards along the protruding body 12a, as indicated by arrows f8, so as to position itself again at the area of the holes 12'.

As in the case of the previous movements, also this movement of the sealing ring 13 can be controlled by the operator OP through the pneumatic piston 16b schematised in Fig. 2.

Then the sealing ring 13 is inflated again, always on command of the operator OP, so as to press on the edge S' of the bag S in the area of the holes 12'.

In this way, the bag S, containing the new drum F to be emptied, is permanently fixed to the protruding body 12a, while it continues to isolate the area of the entry port 12 with respect to the outside environment in which the operator OP operates.

At this point, as schematised in Fig. 1 - section (k), the operator OP, operating from the outside of the apparatus 10, pushes and drags manually with his hands M the drum F so as to place it, at least partially, or with its mouth closed by the lid C, inside the box-like body 11a of the isolator 11, as indicated by arrows f9 and f10.

Then the same operator OP, always working from the outside of the apparatus 10, after having removed the cover C, moves and shakes the drum F, placed at least partially inside the isolator 11, so as to determine the emptying, by gravity, of the material MA contained in the drum F.

Therefore, the material MA, contained in the drum F, falls downwards, as indicated by an arrow f11, to settle and be received by a conveyor belt, denoted overall by 18, or by functionally equivalent means of evacuation, via which the material MA is evacuated from the emptying apparatus 10, as indicated by an arrow f12, to be subsequently treated or generally used in a station of the more general treatment plant in which the emptying apparatus 10 is integrated and of which it is part.

At this point, as schematised in Fig. 1 - section (l) and indicated by an arrow f13, the drum F is removed from the inside of the isolator 11 by the operator OP, always operating on the outside of the same isolator 11, and again inserted into the bag S still permanently attached to the protruding body 12a and placed on the outside of the latter.

Subsequently, as schematised in Fig. 1 - section (m), the residual portion PI of the bag S, containing the newly emptied drum F, is removed from the inside of the box-like body 11a of the isolator 11, where it was temporarily parked, and manually introduced by the operator OP, as indicated by an arrow f14, into the empty drum F, placed in the bag S.

Then the operator OP closes with the cover C the drum F placed in the sealing bag S, again as schematised in Fig. 1 - section (m), so that the remaining portion PI of the bag S is captured inside the same drum F.

Subsequently, as schematised in Fig. 1 - section (n) and indicated by an arrow f15, the operator OP manually rotates the drum F, emptied of the powdered material MA and wrapped by the sealing bag S, with respect to the portion of the sealing bag S attached to the protruding body 12a of the entry port 12.

In this way, i.e. as a result of this manual rotation, the sealing bag S is divided into two distinct portions, denoted by P' and P", corresponding respectively to the portion of the sealing bag S that is attached to the protruding body 12a of the entry port 12 and to the portion of the sealing bag S that wraps the drum F emptied of the powdered material MA, in which these two portions P' and P" are separated by a rolled portion, denoted by R, of the sealing bag S.

Then, again as schematised in Fig. 1 - section (n), the operator OP tightens two straps, respectively L1 and L2, around two zones, arranged at a certain distance H one from the other, of this rolled portion R defined between the two portions P' and P" of the sealing bag S.

Then the same operator OP cuts this rolled portion T at an intermediate point between the two straps L1 and L2, so as to materially separate the two portions P' and P" of the sealing bag S, as schematised with a dotted and dashed line and scissors f16 in Fig. 1 - section (n) and with an arrow f17 in Fig. 1 - section (o).

Finally, as schematised with an arrow f18 in Fig. 1 - section (p), the empty drum S, wrapped and contained in the portion P" of the sealing bag S, closed by the strap L2, is evacuated from the emptying apparatus 10, to make room and allow the same apparatus 10 to be fed and receive a new drum F, to be emptied, containing the powdered material MA.

Therefore, in this way, the emptying apparatus 10 is prepared to carry out a new emptying cycle of a new drum F, exactly as described before with reference to Fig. 1 - sections (a)-(p).

It is therefore clear, from what has been described, that the present invention fully achieves the objectives set, and in particular proposes, in comparison with the prior art and the apparatuses already in use, a new and innovative apparatus for emptying drums in strict containment conditions, which, in addition to ensuring the necessary conditions of isolation and tightness of the drums to be emptied with respect to the outside environment, is able to make more convenient the manual operations that are performed by an operator operating outside the apparatus to empty the drums received and placed inside the same apparatus.

Moreover, advantageously, the apparatus of the invention involves a limited running cost, since, unlike the prior art, it does not require in use and operation a cyclical consumption of components and parts that are lost at each cycle of emptying a drum.

### Variants

Without prejudice to the basic concepts of the present invention, it is also clear that changes and further improvements may be made to the apparatus described hitherto, for emptying drums in strict containment conditions, without departing from the scope of the same invention.

For example, the apparatus of the invention for emptying drums in strict containment conditions may be equipped with appropriate and specific washing devices to wash, if necessary, its interior, as well as means of cleaning, for example in the form of nozzles capable of emitting jets of compressed gas, which have the function of keeping clean certain areas subject to accumulation of powdered material.

Furthermore, it is underlined that the apparatus of the invention is not restricted and limited to the emptying from drums of a typically powdered material, as described above with reference to the respective preferred embodiment 10, but can also be advantageously applied for the emptying, under conditions of strict containment, drums containing substances in liquid form, or in a non-powdered, solid form.

Finally, the technical concept underlying the apparatus and process of the invention can be extended and implemented, by analogy, in applications, embodiments and operations aimed at filling drums with substances and materials in solid form, powdered or otherwise, as well as in liquid form.

## Claims

1. Station (10) for the discharging of drums (F, F-1, F-2, F-3) under rigorous containment conditions, in particular containing a powdered material (MA) provided to be treated in a reactor or a similar treatment apparatus or plant, comprising:
- an isolator (11) having a respective box-like body (11a) adapted to receive, in its interior, the drums (F), one after the other, to be discharged, and to isolate them from an operator (OP) operating manually from the outside of said isolator (11) on the drums received and arranged inside the box-like body (11a) of the isolator (11), in order to discharge them; and
- an entry port (12) associated with said isolator (11) and having a body (12a) protruding from the respective box-like body (11a), through which entry port (12) the drums (F) to be discharged are received by and introduced inside the isolator (11);
wherein the drums (F), provided to be received by and introduced, one after the other, in said isolator (11) so as to be discharged, are each contained in a respective sealing bag (S), and
wherein the station (10) is configured to allow, in its use, the respective operator (OP) to perform, by operating from the exterior of the isolator (11), the following operations:
- extracting the drums (F) to be discharged, one after the other, from the respective sealing bags (S), attached to the entry port (12) of the isolator (11), in which sealing bags the drums (F) are contained;
- introducing the drums (F), extracted from the respective sealing bags (S), at least partially inside the isolator (11), and
- removing a cover (C) of each drum (F) received by the station (10), so as to cause the fall by gravity of the material (MA) contained in the same drum (F) and its consequent emptying;
the station (10) being **characterized in that** it further comprises:
- a sealing ring (13), selectively inflatable and deflatable, associated with the protruding body (12a) of the entry port (12) of the isolator (11) and shiftable along it; and
**in that the** station (10) is configured to allow, in its use, the respective operator (OP) to inflate and deflate said sealing ring (13) and to selectively shifting it (f2, f5, f8) along the protruding body (12a) of the entry port (12) in order to attach to and detach the sealing bags (S), containing the drums (F) to be discharged, from the same protruding body (12a), and to seal the area of the entry port (12) during these operations to attach to and detach from the protruding body (12a) of the entry port (12) the sealing bags (S) of the drums (F, F-1, F-2, F-3) to be discharged.

2. Station (10) for the discharging of drums under rigorous containment conditions according to claim 1, **characterized in that** the protruding body (12a) of said entry port (12) of the isolator (11) has, along and adjacently to a respective edge (12"), a plurality of holes (12'), in turn associated with ventilating means, of known characteristics, for generating a ventilation or an air flow suitable to create a depression in the area of said holes (12'); and
**in that**, in the use of the station (10) to discharge the drums (F) received and introduced into the isolator (11) of the same station (10), said ventilating means are activated to create said depression in the area of said holes (12') arranged along and adjacently to the edge (12") of the protruding body (12a) of the entry port (12) of the isolator (11), so as to improve adhesion, to the protruding body (12a) of the entry port (12), of the sealing bags (S) attached to the protruding body (12a), and thereby also the sealing of the zone of the entry port (12) by means of said sealing bags (S) attached to the protruding body of the entry port (12) of the isolator (11).

3. Station (10) for the discharging of drums under rigorous containment conditions according to claim 2, **characterized in that** said station (10) is configured to allow, in its use, the respective operator (OP) to perform in succession and cyclically the following operations, in order to discharge a new drum (F), included in the drums (F, F-1, F-2, F-3) received one after the other by said isolator (11), starting from a configuration of the same station (10) in which a residual portion (P1, P') of the sealing bag (S) containing the preceding drum, that is the one lastly received by the isolator (11) and therefore discharged immediately prior to the new drum (F) to be discharged, is arranged around and attached to an edge (12") of the protruding body (12a) of the entry port (12) of the isolator (11), and said sealing ring (13), previously inflated by the operator (OP), is placed around and pressed against said residual portion (P1, P'), in the zone of said holes (12') arranged along the edge (12") of the protruding body (12a) of the entry port (12) of the isolator (11):
- deflating the sealing ring (13) and shifting it backwards (f2) along the protruding body (12a) of said entry port (12), that is from the area of said holes (12') towards the inside of the isolator, so as to disengage said residual portion (P1) from the entry port (12);
- shifting forward (f3), along the protruding body (12a) of said entry port (12), said residual portion (P1), so as to free an area along the protruding body of said entry port (12);
- arranging (f4) an open edge (S'), of the sealing bag (S) containing the new drum (F) to be discharged, around the protruding body (12a) of the entry port (12), in the area left free by the forward shifting of said residual portion (P1) of the sealing bag (S) containing the preceding drum;
- shifting the sealing ring (13) forward (f5) along the protruding body (12a) of the entry port (12);
- inflating the sealing ring (13) so as to press it against the edge (S'), of the sealing bag (S) containing the new drum (F) to be discharged, which edge is arranged around the protruding body (12a) of said entry port (12), in the area left free by said residual portion of the sealing bag (S) of the preceding drum, so as to seal the sealing bag (S), containing the new drum to be discharged, hermetically against said entry port;
- removing (f6, f7) from the entry port (12), by manually operating from the exterior of the isolator, the residual portion (P1) of the sealing bag of the preceding drum to be discharged and transferring such residual portion (P1) into the interior of the isolator (11);
- deflating the sealing ring (13) and shifting it forward (f8) along the protruding body (12a) of the entry port (12), so as to place again the sealing ring (13) in the zone of said holes (12');
- inflating the sealing ring (13) so as to still press it against the edge (S') of the sealing bag (S) containing the new drum (F) to be discharged, arranged around the protruding body (12a) of the entry port, so as to seal the sealing bag, containing the new drum to be discharged, hermetically against said entry port (12);
- extracting (f9), by operating from the exterior of the isolator, the drum (F) to be discharged from the respective sealing bag attached to the protruding body of the entry port and introducing (f10) the drum at least partially inside the isolator;
- removing, by operating manually from the outside of the isolator, the cover (C) of the drum, to be discharged, introduced and arranged at least partially inside the isolator (11), so as to cause the fall (f11) by gravity of the material (MA) contained in the same drum (F) and its consequent emptying, so that the material (MA) discharged by gravity from the drum (F) is evacuated and transferred (f12) away from the discharging station (10);
- removing (f13), always by operating manually from the outside of the isolator (11), the empty drum (F) from the inside of the isolator (11) and from the entry port (12) and introducing said empty drum (F) into the sealing bag (S), of the same drum, attached to the protruding body (12a) of the entry port (12) of the isolator (11);
- removing (f14) from the inside of the isolator (11), together with the removal of the empty drum and always by operating from the exterior of the isolator, the cover (C) of the drum (F) that has been emptied and the residual portion (P1) of the sealing bag of the preceding drum and throwing them (C, P1) into the sealing bag (S) attached to the protruding body (12a) of the entry port (12) of the isolator (11);
- rolling (f15) the sealing bag (S), containing the empty drum (F) of the material (MA), with respect to the portion (P'), of the same sealing bag (S), attached to the protruding body (12a) of the entry port (12);
- clamping by means of suitable clamping means such as elastic straps (L1, L2) two zones, arranged at a certain distance (H) one from the other, of the rolled portion (R) of the sealing bag (S) defined between the respective portion (P') attached to the protruding body of the entry port and that (P") containing the empty drum (F);
- cutting (f16) the rolled portion (R) of the sealing bag (S) at a point between the respective two zones clamped by said clamping means, so as to divide and separate (f17) the sealing bag into two distinct portions, respectively a first residual portions (P') which remains attached to the protruding body (12a) of the entry port (12) and a second portion (P") that envelops and contains the empty drum, the respective cover (C) and the residual portion (P1) of the sealing bag which was containing the preceding drum; and
- removing (f18) the discharged and empty drum (F) and the other parts contained in said second portion (P"), of the sealing bag (S), which has been separated from said first residual portion (P'), so as to arrange the station (10) to receive a subsequent new drum to be discharged and then perform a new discharging cycle.

4. Station (10) for the discharging of drums under rigorous containment conditions, according to any one of the preceding claims, comprising one or more openings which are provided on the outer surface of said isolator (11), with each opening being sealed by a flexible bag or a similar element suitable to act as a glove to allow the operator to operate manually from the exterior of the isolator on the drums, to be discharged, received by and introduced into the isolator, without entering into direct contact and therefore while remaining isolated from them.

5. Station (10) for the discharging of drums under rigorous containment conditions, according to any one of the preceding claims, wherein the material (MA) discharged from the drums (F) is intended to be evacuated and transferred away (f12) from the same discharging station (10), in particular into a treatment station, such as a reactor, of the same material (MA).

6. Station (10) for the discharging of drums under rigorous containment conditions, according to any one of the preceding claims, wherein said station (10) comprises a pneumatic piston (16b) or a functionally equivalent actuator capable of driving, under the control of the operator (OP) of the same station (10), the shifting (f2, f5, f8) of the sealing ring (13) along the protruding body (12a) of the entry port (12) of the isolator (11).

7. Process for the discharging of drums (F, F-1, F-2, F-3) under rigorous containment conditions, in particular containing a powdered material (MA), by means of a discharging station (10) comprising:
- an isolator (11) having a box-like body (11a) suitable to receive, in its interior, one after the other, the drums (F) to be discharged, and to isolate them from an operator (OP) manually operating from the outside of said isolator (11) on the drums received and arranged inside the box-like body (11a) of the isolator (11), in order to discharge and therefore empty them (F); and
- an entry port (12) associated with said isolator (11) and having a protruding body (12a) protruding from the respective box-like body (11a), through which entry port (12) the drums (F) to be discharged are received by and introduced inside the isolator (11);
wherein the drums (F), provided to be received by and introduced, one after the other, in said isolator (11) so as to be discharged, are each contained in a respective sealing bag (S),
wherein the process comprises the following steps:
- providing a selectively inflatable and deflatable sealing ring (13) associated with the protruding body (12a) of the entry port (12) of the isolator (11) and shitftable along said protruding body (12a); and
- inflating and deflating said sealing ring (13) and selectively shifting it (f2, f5, f8) along the protruding body (12a) of the entry port (12) in order to attach to and detach from the protruding body (12a) the sealing bags (S) containing the drums (F) to be discharged and to seal the zone of the entry port (12) during such operations directed to selectively attach to and detach from the protruding body (12a) of the entry port (12) the sealing bags (S) of the drums (F, F-1, F-2, F-3) to be discharged.

8. Process for the discharging of drums (F, F-1, F-2, F-3) under rigorous containment conditions according to claim 7, further comprising the following steps performed successively and cyclically in order to discharge a new drum (F), included in the drums (F, F-1, F-2, F-3) received one after the other by the isolator (11), starting from a configuration of the device (10) in which a residual portion of the sealing bag containing the preceding drum, that is containing the drum lastly received by the isolator (11) and therefore emptied immediately before the new drum (F) to be discharged, is arranged around and attached to an edge (12") of the protruding body (12a) of the entry port (12) of the isolator (11), and the previously inflated sealing ring (13) is arranged around and presses against the residual portion (P1, P'), in the zone of the edge (12") of the protruding body (12a) of the entry port (12) of the isolator (11):
- deflating the sealing ring (13) and shifting it backwards (f2) along the protruding body (12a) of said entry port (12), that is from the area of the edge (12") of the protruding body (12a) towards the inside of the isolator, so as to disengage said residual portion (P1) from said entry port (12);
- shifting forward (f3), along the protruding body (12a) of said entry port (12), said residual portion (P1), so as to free an area along the protruding body of said entry port (12);
- arranging (f4) an open edge (S'), of the sealing bag (S), containing the new drum to be discharged, around the protruding body (12a) of the entry port (12), in the area left free by the forward shifting of said residual portion (P1) of the sealing bag containing the preceding drum;
- shifting forward (f5) the sealing ring (13) along the protruding body (12a) of the entry port (12);
- inflating the sealing ring (13) so as to press it against the edge, of the sealing bag (S) containing the new drum (F) to be discharged, which edge is arranged around the protruding body (12a) of said entry port (12), in the area left free by said residual portion of the sealing bag (S) containing the preceding drum, so as to seal the sealing bag (S), containing the new drum to be discharged, hermetically against said entry port;
- removing (f6, f7) from the entry port, by manually operating from the exterior of the isolator, the residual portion (P1) of the sealing bag of the preceding drum to be discharged and transferring it into the interior of the isolator (11);
- deflating the sealing ring (13) and shifting it forward (f8) along the protruding body (12a) of the entry port (12), so that the sealing ring (13) is placed again in the zone near the edge (12") of the protruding body (12a);
- inflating the sealing ring (13) so as to still press it against the edge of the sealing bag (S) containing the new drum (F) to be discharged, arranged around the protruding body (12a) of the entry port, so as to seal the sealing bag, containing the new drum to be discharged, hermetically against said entry port;
- extracting (f9), by operating from the exterior of the isolator, the drum (F), to be discharged, from the respective sealing bag attached to the protruding body of the entry port and introducing (f10) the same drum at least partially inside the isolator;
- removing, by operating manually from the outside of the isolator, a cover (C) of the drum, to be discharged, introduced and arranged at least partially inside the isolator (11), so as to cause the fall (f11) by gravity of the material (MA) contained in the same drum (F) and its consequent emptying, so that the material (MA) discharged by gravity from the drum (F) is evacuated and transferred (f12) from the discharging station (10);
- removing (f13), always by operating manually from the outside of the isolator (11), the empty drum from the inside of the isolator and from the entry port (12) so as to introduce said empty drum into the sealing bag (S), of the same drum, attached to the protruding body (12a) of the entry port (12) of the isolator (11);
- removing (f14) from the inside of the isolator (11), together with the removal of the empty drum and always by operating from the exterior of the isolator, the cover (C) of the drum that has been emptied and the residual portion (P1) of the sealing bag of the preceding drum and throwing them (C, P1) into the sealing bag attached to the protruding body of the entry port of the isolator;
- rolling (f15) the sealing bag (S), containing the empty drum (F) of the material (MA), with respect to the portion (P'), of the same sealing bag (S), attached to the protruding body (12a) of the entry port (12);
- clamping, by means of suitable clamping means such as elastic straps (L1, L2) two zones, arranged at a certain distance (H) one from the other, of the rolled portion (R) of the sealing bag (S) defined between the respective portion (P') attached to the protruding body of the entry port and that (P") containing the empty drum (F);
- cutting (f16) the rolled portion (R) of the sealing bag (S) at a point between the respective two zones clamped by said clamping means, so as to divide and separate (f17) the sealing bag two distinct portions, respectively a first residual portions (P') which remains attached to the protruding body (12a) of the entry port (12) and a second portion (P") that envelops and contains the empty drum, the respective cover (C) and the residual portion (P1) of the sealing bag containing the preceding drum; and
- removing (f18) the discharged and empty drum (F) and the other parts contained in said second portion (P"), of the sealing bag (S), which has been separated from said first residual portion (P'), so as to arrange the station (10) to receive a subsequent new drum to be discharged and then perform a new discharging cycle.

9. Process for the discharging of drums (F, F-1, F-2, F-3) under rigorous containment conditions according to claim 7 or 8, wherein the protruding body (12a) of said entry port (12) of the isolator (11) exhibits, along and adjacently to the respective edge (12"), a plurality of holes (12'), in turn associated with ventilating means, of known characteristics, for generating a ventilation or an air flow suitable to create a depression in the area of said holes (12'), so as to improve the sealing and hermetic conditions in the zone of the entry port (12) during the execution of the process for the discharging of drums (F).

10. A treatment plant comprising a station (10), according to any one of claims 1 to 7, for the discharging of drums (F, -1, F-2, F-3) under rigorous containment conditions, suitable to be fed and receive in succession said drums (F, F-1, F-2, F-3) containing a material (MA), in particular a powdered material, provided for being treated in said plant.
